# EUROPEAN PATENT APPLICATION

(11) **EP 4 091 912 A2**
(43) Date of publication of application: **23.11.2022**
(21) Application number: 22174285.1
(22) Date of filing: 19.05.2022
(51) Int. Cl.: B62D 15/02, B60W 30/06, G08G 1/16

(54) **GUIDANCE METHOD AND APPARATUS FOR PARKING FUNCTION IN AUTONOMOUS DRIVING**

(30) Priority: 19.05.2021 CN 202110548542
(71) Applicant: Guangzhou Xiaopeng Motors Technology Co., Ltd., Tianhe District Guangzhou Guangdong (CN)
(72) Inventor: DAI, Guanqi, Guangzhou (CN); RAO, Heng, Guangzhou (CN); YAN, Zhenjie, Guangzhou (CN); SUN, Hongxiao, Guangzhou (CN); HU, Zhimiao, Guangzhou (CN)
(74) Representative: Ran, Handong

(57) **Abstract**

Embodiments of the present invention provide a guidance method and apparatus for a parking function in autonomous driving. The method includes: when a parking route with a designated position in a parking lot as a starting point and a target parking space as an end point is successfully learned, starting autonomous driving guidance towards the parking route in response to a user operation; returning guidance information for driving a current vehicle from a current position to the starting point of the parking route to a user during the autonomous driving guidance; and ending the autonomous driving guidance when the current vehicle drives to the starting point of the parking route. Through the embodiments of the present invention, when the parking route is successfully learned, guidance on a parking function is provided for the user, thereby helping the user to quickly and successfully activate autonomous driving towards the parking route.

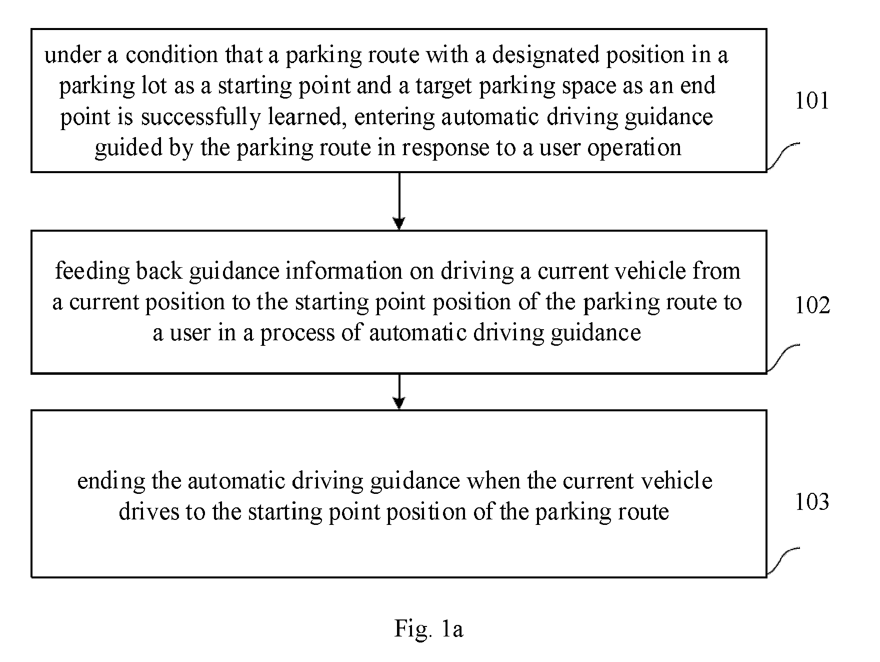

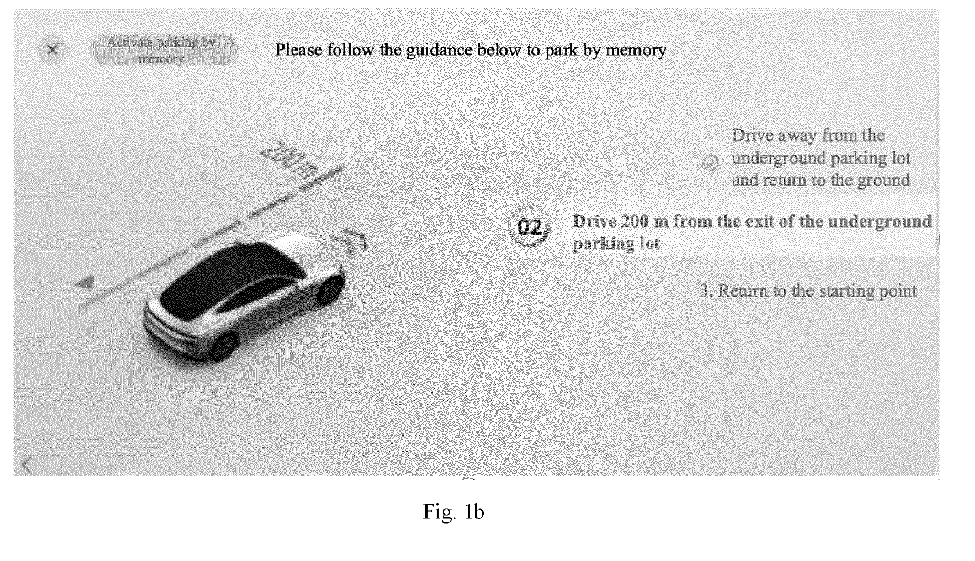

## Description

### Field of Invention

The present invention relates to the field of autonomous driving technologies, and in particular, to a guidance method and apparatus for a parking function in autonomous driving.

### Background

In the field of autonomous driving technologies, automatic parking is usually involved. Automatic parking requires a user to drive a vehicle to the vicinity of an available parking space. Only when an available parking space is detected, the vehicle can be automatically parked in the available parking space. Such an approach has certain limitations.

### Summary of Invention

In view of the problems above, a guidance method and apparatus for a parking function in autonomous driving are proposed to overcome or at least partially solve the problems.

A guidance method for a parking function in autonomous driving includes:
when a parking route with a designated position in a parking lot as a starting point and a target parking space as an end point is successfully learned, starting autonomous driving guidance towards the parking route in response to a user operation;
returning guidance information for driving a current vehicle from a current position to the starting point of the parking route to a user during the autonomous driving guidance; and
ending the autonomous driving guidance when the current vehicle drives to the starting point of the parking route.

Optionally, said returning guidance information for driving a current vehicle from a current position to the starting point of the parking route to a user during the autonomous driving guidance includes:
during the autonomous driving guidance, presenting a plurality of guiding visual elements in an autonomous driving guidance interface based on states of guidance steps in the autonomous driving guidance, so as to return operation guidance information of the guidance steps in the autonomous driving guidance to the user, wherein each of the guiding visual elements corresponds to one guidance step in the autonomous driving guidance.

Optionally, said presenting a plurality of guiding visual elements in an autonomous driving guidance interface based on states of guidance steps in the autonomous driving guidance includes:
when a target guidance step is in an ongoing state, presenting a guiding visual element corresponding to the target guidance step in the autonomous driving guidance interface at a first intensity level.

Optionally, said presenting a plurality of guiding visual elements in an autonomous driving guidance interface based on states of guidance steps in the autonomous driving guidance further includes:
when a target guidance step is in a completed state, presenting a guiding visual element corresponding to the target guidance step in the autonomous driving guidance interface at a second intensity level, wherein the second intensity level is lower than the first intensity level.

Optionally, said presenting a plurality of guiding visual elements in an autonomous driving guidance interface based on states of guidance steps in the autonomous driving guidance further includes:
when a target guidance step is in an uncompleted and non-ongoing state, presenting a guiding visual element corresponding to the target guidance step in the autonomous driving guidance interface at a third intensity level, wherein the third intensity level is lower than the second intensity level.

Optionally, the method further includes:
when a target guidance step is in an ongoing state, presenting a state visual element for the ongoing state within a preset range of a guiding visual element corresponding to the target guidance step, so as to indicate to the user that the target guidance step is in the ongoing state; or
when a target guidance step is in a completed state, presenting a state visual element for the completed state within a preset range of a guiding visual element corresponding to the target guidance step, so as to indicate to the user that the target guidance step is in the completed state.

Optionally, said returning guidance information for driving a current vehicle from a current position to the starting point of the parking route to a user during the autonomous driving guidance further includes:
during the autonomous driving guidance, presenting a route guidance element for an ongoing guidance step in content of environmental simulation display based on the ongoing guidance step, so as to return guidance information for a route to be used to the user.

Optionally, said returning guidance information for driving a current vehicle from a current position to the starting point of the parking route to a user during the autonomous driving guidance further includes:
at the beginning and/or end of a guidance step, pushing an audio message for a starting and/or ending prompt to the user; and
while the audio message for a starting and/or ending prompt is played, when a new message for a starting and/or ending prompt is received, interrupting playing of the prior audio message, and playing the new message. Optionally, said starting autonomous driving guidance towards the parking route in response to a user operation includes:
   in a learning interface for the parking route, presenting an interface element for starting autonomous driving guidance; and
   in response to a user operation on the interface element for starting autonomous driving guidance, starting the autonomous driving guidance towards the parking route.

Optionally, the method further includes:
when the autonomous driving guidance ends, presenting an interface element for starting parking route learning or autonomous driving in an operable state in the autonomous driving guidance interface, so as to return information that the parking route learning or the autonomous driving can be started to the user; or
when the autonomous driving guidance is not ended, presenting an interface element for starting parking route learning or autonomous driving in an inoperable state in the autonomous driving guidance interface, so as to return information that the parking route learning or the autonomous driving cannot be started to the user.

Optionally, the method further includes:
when parking route learning with a designated position in a parking lot as a starting point and a target parking space as an end point fails, presenting, in a learning interface for parking route learning, an interface element for re-starting the parking route learning; and
starting parking route learning guidance in response to a user operation on the interface element for re-starting the parking route learning.

Optionally, the method further includes:
when a currently learned parking route is stored, presenting a view of a parking route storage process on the parking route learning interface, so as to return a storage state of the parking route to the user.

A guidance apparatus for a parking function in autonomous driving includes:
an autonomous driving guidance start module, configured to, when a parking route with a designated position in a parking lot as a starting point and a target parking space as an end point is successfully learned, start autonomous driving guidance towards the parking route in response to a user operation;
a guidance information feedback module, configured to return guidance information for driving a current vehicle from a current position to the starting point of the parking route to a user during the autonomous driving guidance; and
an autonomous driving guidance end module, configured to end the autonomous driving guidance when the current vehicle drives to the starting point of the parking route.

A vehicle includes a processor, a memory and a computer program stored on the memory and capable of being run on the processor, wherein when the computer program is executed by the processor, the guidance method for a parking function in autonomous driving described above is implemented.

A computer readable storage medium is provided, wherein the computer readable storage medium stores a computer program, and when the computer program is executed by a processor, the guidance method for a parking function in autonomous driving described above is implemented.

Embodiments of the present invention have the following advantages:
In the embodiments of the present invention, when a parking route with a designated position in a parking lot as a starting point and a target parking space as an end point is successfully learned, autonomous driving guidance towards the parking route is started in response to a user operation; guidance information for driving a current vehicle from a current position to the starting point of the parking route is returned to a user during the autonomous driving guidance; and the autonomous driving guidance is ended when the current vehicle drives to the starting point of the parking route, so that when the parking route is successfully learned, guidance on a parking function is provided for the user, thereby helping the user to quickly and successfully activate autonomous driving towards the parking route.

### Brief Description of Drawings

To more clearly illustrate the technical solutions of the present invention, accompanying drawings that need to be used in description of the present invention will be briefly described below. Clearly, the accompanying drawings in the following description show only some embodiments of the present invention, and a person of ordinary skill in the art may further obtain other accompanying drawings according to the accompanying drawings without creative efforts.
Fig. 1a is a flowchart of steps of a guidance method for a parking function in autonomous driving according to an embodiment of the present invention;
Fig. 1b shows an interactive interface according to an embodiment of the present invention;
Fig. 1c is a schematic flowchart of parking route storage according to an embodiment of the present invention;
Fig. 2a is a flowchart of steps of another guidance method for a parking function in autonomous driving according to an embodiment of the present invention;
Fig. 2b shows a guidance message according to an embodiment of the present invention;
Fig. 2c shows another guidance message according to an embodiment of the present invention;
Fig. 2d shows still another guidance message according to an embodiment of the present invention;
Fig. 3a is a flowchart of steps of still another guidance method for a parking function in autonomous driving according to an embodiment of the present invention;
Fig. 3b shows another interactive interface according to an embodiment of the present invention;
Fig. 4a is a flowchart of steps of yet another guidance method for a parking function in autonomous driving according to an embodiment of the present invention;
Fig. 4b shows still another interactive interface according to an embodiment of the present invention;
Fig. 4c shows yet another interactive interface according to an embodiment of the present invention; and
Fig. 5 is a structural block diagram of a guidance apparatus for a parking function in autonomous driving according to an embodiment of the present invention.

### Detailed Description

To make the foregoing objectives, features and advantages of the present invention more clearly understood, the present invention will be further described in detail below with reference to the accompanying drawings and specific implementations. Clearly, the embodiments described are some rather than all of the embodiments of the present invention. Based on the embodiments of the present invention, all other embodiments obtained by a person of ordinary skill in the art without creative efforts shall fall within the protection scope of the present invention.

In practical application, in an autonomous driving process of a current vehicle in a parking lot, automatic parking can be started only when the current vehicle detects a target parking space. The current vehicle cannot start automatic parking in the route from entering the parking lot to detecting the target parking space, and thus a specific situation in this route cannot be determined, resulting in relatively poor safety of autonomous driving.

To improve safety of autonomous driving, a parking route of the current vehicle from entering the parking lot to the target parking space can be learned. The learning process may be as follows: after the vehicle enters the parking lot, and before the target parking space is detected, the parking route is learned. Specifically, when the current vehicle drives to a designated position, learning of the parking route can be triggered, the current vehicle is controlled to drive to an area in which the target parking space can be detected, and then is parked in the target parking space, and then memory modeling is performed on a scenario related to the route, thereby completing the learning of the parking route.

After the learning of the parking route is completed, the current vehicle may perform autonomous driving towards the parking route. The present invention aims at a process of guiding the user to quickly and successfully activate autonomous driving towards the parking route after successful learning of the parking route.

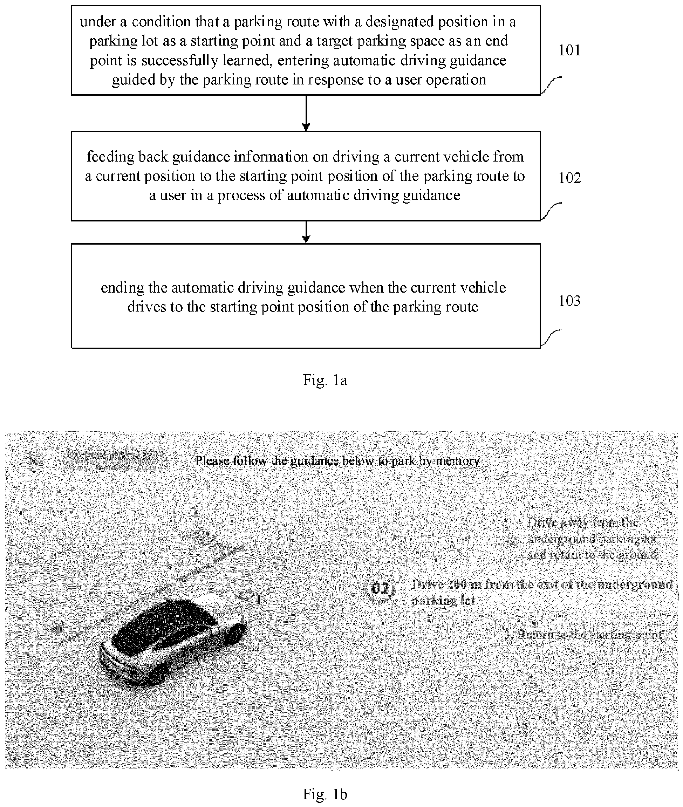

Fig. 1a is a flowchart of steps of a guidance method for a parking function in autonomous driving according to an embodiment of the present invention, which may specifically include the following steps.

Step 101: when a parking route with a designated position in a parking lot as a starting point and a target parking space as an end point is successfully learned, starting autonomous driving guidance towards the parking route in response to a user operation.

The parking route may be a driving route from the designated position in the parking lot until the vehicle is parked in the target parking space in the parking lot (parking lot in closed space, such as an underground parking lot). The designated position may be a position at which parking route learning is triggered, i.e., a starting point of the parking route, and may be within a preset distance range of the target parking space, such as within 1 km. The target parking space may be a parking space in which the vehicle is finally parked in a process of parking route learning, and may be the user's commonly used parking space.

The current vehicle triggers a parking route learning mode in the parking lot (such as an underground parking lot), and may start learning of a parking route from a designated position to a designated parking space. After the parking route learning is completed, it can be judged whether the parking route learning is successful.

To facilitate the user's activating an autonomous driving process towards the parking route, when the parking route is successfully learned, when the user needs to immediately experience the autonomous driving process towards the pre-learned parking route, autonomous driving guidance towards the parking route may be started in response to a user operation, so as to quickly guide the user back to the starting point of the parking route.

Step 102: returning guidance information for driving a current vehicle from a current position to the starting point of the parking route to a user during the autonomous driving guidance.

During the autonomous driving guidance, the guidance information for driving the current vehicle from the current position to the starting point of the parking route may be returned to the user. Specifically, a manner of a feedback to the user may be: presenting different content of environmental simulation display and/or pushing a prompt message (such as a voice prompt/pop-up prompt), etc.

In an embodiment of the present invention, step 102 may include:
during the autonomous driving guidance, presenting a route guidance element for an ongoing guidance step in content of environmental simulation display based on the ongoing guidance step, so as to return guidance information for a route to be used to the user.

The content of environmental simulation display may include:
environmental simulation elements and perception enhancement elements for the current vehicle, a fixed-arranged target, a temporarily-arranged target, and a dynamically-arranged target.

It should be noted that the perception enhancement element is an element with a perception enhancement function in the content of environmental simulation display, and may perform visual presentation in environmental simulation display, thereby assisting a user to better perceive the environmental information, but is not an element corresponding to entity information in the content of environmental simulation display. For example, an environmental simulation element for a target is an element corresponding to entity information.

The fixed-arranged target may include a parking space, a vehicle, a speed bump, a gate opening, a lane line, or the like. The temporarily-arranged target may include a parked bicycle, an obstacle, or the like. The dynamically-arranged target may include other vehicles, a pedestrian, a two-wheeled vehicle, or the like. The perception enhancement element may include visual field fog, route guidance, key node marks (a starting point, an end point, and a commonly used parking space), or the like. In practical application, during the autonomous driving guidance, the current vehicle may detect a surrounding environment through its own sensor device, so that corresponding content of environmental simulation display may be presented on a guidance interface based on detected environmental information, and thus the user can better perceive the surrounding environment.

During the autonomous driving guidance, a plurality of guidance steps may be included. The current vehicle may determine an ongoing guidance step. In addition, a route guidance element for the ongoing guidance step is displayed in content of environmental simulation display, so as to return guidance information for a route to be used to the user, so that the current vehicle drives based on the route guidance element.

Fig. 1b shows a guidance interface. The top of the interface is a scenario prompt "Please follow the guidance below to Valet Parking Assist (VPA)"; the left side of the interface is current content of environmental simulation display, including an environmental simulation element and a route guidance element (distance indication "200 m" and a driving guidance line) for a current vehicle; and the right side of the interface is a guiding visual element for displaying based on guidance steps, indicating that a guidance step of "Drive away from the underground parking lot and return to the ground" is in a completed state, a guidance step of "Drive 200 m from the exit of the underground parking lot" is in an ongoing state, and a guidance step of "Return to the starting point" is in an uncompleted and non-ongoing state.

In an embodiment of the present invention, step 102 may include:
at the beginning and/or end of a guidance step, pushing an audio message for a starting and/or ending prompt to the user; and while the audio message for a starting and/or ending prompt, when a new message for a starting and/or ending prompt is received, interrupting playing of the prior audio message, and playing the new message.

In practical application, a message for a starting and/or ending prompt may be set for each guidance step, and it should be noted that the message may be a pop-up message or a voice broadcast message.

In a driving process of the current vehicle, at the beginning and/or end of each guidance step, a corresponding audio message may be pushed, to inform the user of the current guidance step.

When the current vehicle starts a next guidance step while an audio message for a starting and/or ending prompt is played, and a new message for a starting and/or ending prompt may be received, to enable the user to receive a latest message in time, playing of the prior message may be interrupted, and the new message may be played.

Step 103: ending the autonomous driving guidance when the current vehicle drives to the starting point of the parking route.

The current vehicle may drive to the starting point of the parking route based on the autonomous driving guidance, to end the autonomous driving guidance.

In an embodiment of the present invention, the method further includes:
when the autonomous driving guidance ends, presenting an interface element for starting parking route learning or autonomous driving in an operable state in the autonomous driving guidance interface, so as to return information that the parking route learning or the autonomous driving can be started to the user; or
when the autonomous driving guidance is not ended, presenting an interface element for starting parking route learning or autonomous driving in an inoperable state in the autonomous driving guidance interface, so as to return information that the parking route learning or the autonomous driving cannot be started to the user.

In practical application, the guidance interface may present an interface element for starting parking route learning or autonomous driving, such as an "Activate VPA" button in the upper left corner of Fig. 1b. When autonomous driving guidance is uncompleted, the button is dimmed, indicating that the interface element is in an inoperable state. When the autonomous driving guidance is ended, the interface element is presented in an operable state. Then, when the user operates the interface element (such as clicking "Activate VPA"), autonomous driving towards the parking route can be started.

In an embodiment of the present invention, the method further includes:
when a currently learned parking route is stored, presenting a view of a parking route storage process on the parking route learning interface, so as to return a storage state of the parking route to the user.

In practical application, when the parking route learning is completed, the currently learned parking route may be stored, so as to perform autonomous driving in the current parking lot based on the stored parking route.

When the currently learned parking route is stored, a view of a parking route storage process is presented in the parking route learning interface, and the user may be informed that the currently learned parking route is being stored. It should be noted that the message may be a transient pop-up message or a voice broadcast message. This is not excessively limited herein.

In an example, a push cycle may be set, and a message prompting that a parking route is being stored is pushed based on the push cycle. In addition, maximum saving duration may be further set. When route saving duration exceeds the maximum saving duration but the route has not been saved successfully, a message for prompting interruption or failure of parking route storage may be pushed. It should be noted that the message may be a transient pop-up message or a voice broadcast message.

For example, saving duration of a parking route saving process is 100 seconds, and a push cycle of the 8^{th}/16^{th}/30^{th}/60^{th}/90^{th} second is set, to perform voice broadcast reminding. At the 100^{th} second, if the parking route has not been saved successfully, a pop-up prompt or voice broadcast on saving interruption or failure may be pushed for reminding.

In an example, while waiting for storage of a parking route, the user can manually interrupt at any time to switch to store the parking route at the background. In this case, the user exits the page. This does not affect success or failure of parking route learning. After the user exits, the user cannot enter a learning success page and cannot enter a VPA guidance process.

When storage at the background is switched to, a storage result may be received. If the current vehicle has not been powered off, the user may be informed of the storage result of the parking route through a transient pop-up prompt and/or voice broadcast prompt.

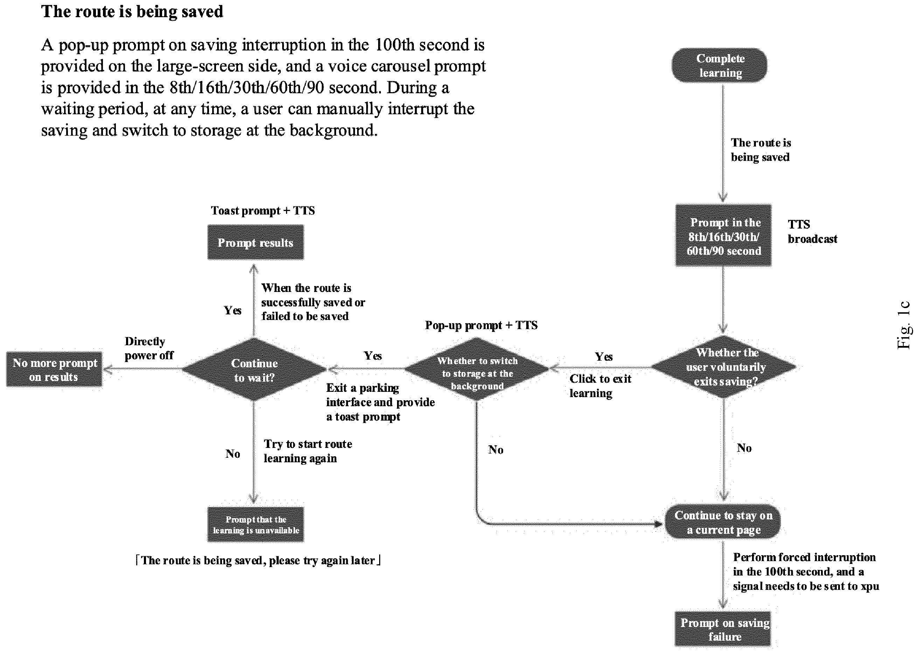

Fig. 1c is a schematic flowchart of parking route storage, and route storage steps thereof include the following.
(1) After parking route learning is completed, a currently learned parking route is saved.
(2) In a route saving process, based on a push cycle of the 8^{th}/16^{th}/30^{th}/60^{th}/90^{th} second, a text to speech (TTS) broadcast is performed to confirm whether the user voluntarily exits saving, and if the user does not voluntarily exit saving, step (3) is performed; and if the user voluntarily exits saving, step (4) is performed.
(3) Continue to stay on a current page. It is judged whether maximum saving duration of 100 seconds is reached. When 100 seconds is reached, forced interruption is performed; in addition, a signal needs to be sent to xpu to confirm saving failure, and a prompt on saving failure is made by voice or a pop-up window.
(4) When the user voluntarily exits saving, "Exit learning" is clicked, and a pop-up prompt or a TTS prompt enables the user to confirm whether to switch to save the parking route at the background.
(5) When it is confirmed not to save the parking route at the background, step (3) is performed.
(6) When it is confirmed to save the parking route at the background, a parking interface is exited, and the user is prompted by a pop-up window that the parking route is being saved at the background.
(7) It is confirmed whether to continue to wait. When the user continues to wait, a pop-up prompt and a TTS prompt on a route saving result may be provided when saving is successful or fails.
(8) When the user tries to start the route learning again without waiting, a message that the learning is unavailable, such as "The route is being saved, please try again later", is pushed.
(9) If the current vehicle is directly powered off, no prompt on a route saving result will be provided.

In this embodiment of the present invention, when a parking route with a designated position in a parking lot as a starting point and a target parking space as an end point is successfully learned, autonomous driving guidance towards the parking route is started in response to a user operation; guidance information for driving a current vehicle from a current position to the starting point of the parking route is returned to a user during the autonomous driving guidance; and the autonomous driving guidance is ended when the current vehicle drives to the starting point of the parking route, so that when the parking route is successfully learned, guidance on a parking function is provided for the user, thereby helping the user to quickly and successfully activate autonomous driving towards the parking route.

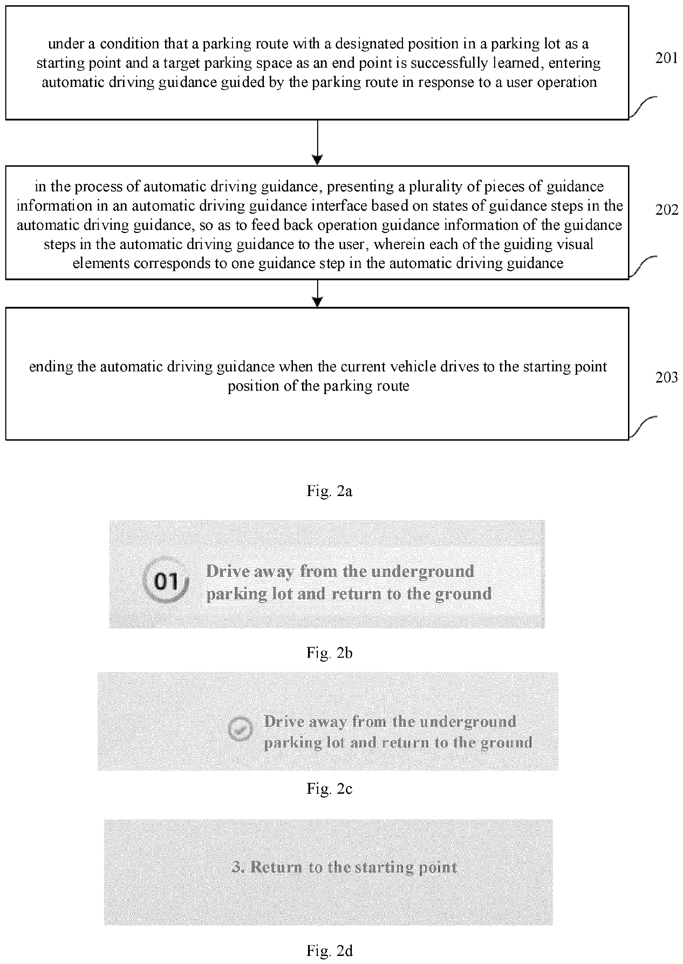

Fig. 2a is a flowchart of steps of another guidance method for a parking function in autonomous driving according to an embodiment of the present invention, which may specifically include the following steps.

Step 201: when a parking route with a designated position in a parking lot as a starting point and a target parking space as an end point is successfully learned, starting autonomous driving guidance towards the parking route in response to a user operation.

Step 202: during the autonomous driving guidance, presenting a plurality of guiding visual elements in an autonomous driving guidance interface based on states of guidance steps in the autonomous driving guidance, so as to return operation guidance information of the guidance steps in the autonomous driving guidance to the user, wherein each of the guiding visual elements corresponds to one guidance step in the autonomous driving guidance.

The autonomous driving guidance may include a plurality of guidance steps, and each of the guidance steps may include an ongoing state, a completed state, and an uncompleted and non-ongoing state. Each of the guidance steps may have a corresponding guiding visual element presented on the interactive interface. It should be noted that the guiding visual element may be text information and/or picture information, and an expression form of the guiding visual elements is not excessively limited herein.

During the autonomous driving guidance, states of guidance steps in the autonomous driving guidance can be determined, and a plurality of guiding visual elements may be present to the user based on the states of the guidance steps, so as to return operation guidance information of the guidance steps in the autonomous driving guidance to the user. Specifically, different states of a guidance step may be represented by display intensities of a guiding visual element.

In an embodiment of the present invention, step 202 may include:
when a target guidance step is in an ongoing state, presenting a guiding visual element corresponding to the target guidance step in the autonomous driving guidance interface at a first intensity level.

In an embodiment of the present invention, step 202 may further include:
when a target guidance step is in a completed state, presenting a guiding visual element corresponding to the target guidance step in the autonomous driving guidance interface at a second intensity level, wherein the second intensity level is lower than the first intensity level.

In an embodiment of the present invention, step 202 may further include:
when a target guidance step is in an uncompleted and non-ongoing state, presenting a guiding visual element corresponding to the target guidance step in the autonomous driving guidance interface at a third intensity level, wherein the third intensity level is lower than the second intensity level.

In practical application, when a target guidance step is in different states, a guiding visual element corresponding to the target guidance step may present different display intensities. Specifically, the display intensity level may be expressed by a font size, a color, brightness, etc.

Display intensities of the guiding visual element corresponding to the target guidance step in different states are in the order of: ongoing state > completed state > uncompleted and non-ongoing state, which can effectively remind the user of currently ongoing guidance steps by the current vehicle.

For example, when the target guidance step is in the ongoing state, the guiding visual element can be enlarged and highlighted; when the target guidance step is in the completed state, the guiding visual element can be displayed normally; and when the target guidance step is in the uncompleted and non-ongoing state, the guiding visual element can be dimmed.

In an embodiment of the present invention, the method further includes:
when a target guidance step is in an ongoing state, presenting a state visual element for the ongoing state within a preset range of a guiding visual element corresponding to the target guidance step, so as to indicate to the user that the target guidance step is in the ongoing state; or
when a target guidance step is in a completed state, presenting a state visual element for the completed state within a preset range of a guiding visual element corresponding to the target guidance step, so as to indicate to the user that the target guidance step is in the completed state.

In practical application, when the target guidance step is in the ongoing state or the completed state, a state guide may be further added to the guiding visual element.

The state guide may be text information and/or picture information. The text information may be "The current step is ongoing", "Completed", etc. The picture information may be a rotating cycle motion effect diagram, a tick icon, etc. The rotating cycle motion effect diagram may be used to indicate the ongoing state, and the tick icon may be used to indicate the completed state.

Fig. 2b shows a guiding visual element displayed on a guidance interface when a guidance step of "Drive away from the underground parking lot and return to the ground" is ongoing; and Fig. 2c shows a guiding visual element displayed on a guidance interface when the guidance step of "Drive away from the underground parking lot and return to the ground" has been completed. In addition, Fig. 2d shows a guiding visual element displayed on a guidance interface when the target guidance step is in an uncompleted and non-ongoing state. No state guide is added to the guiding visual element, and the guiding visual element is only used for display.

Step 203: ending the autonomous driving guidance when the current vehicle drives to the starting point of the parking route.

In this embodiment of the present invention, when a parking route with a designated position in a parking lot as a starting point and a target parking space as an end point is successfully learned, autonomous driving guidance towards the parking route is started in response to a user operation; during the autonomous driving guidance, a plurality of pieces of guidance information are presented to a user based on states of guidance steps in the autonomous driving guidance, and each piece of guidance information corresponds to one guidance step in the autonomous driving guidance; and the autonomous driving guidance is ended when the current vehicle drives to the starting point of the parking route, so that guiding visual elements are presented based on the states of the guidance steps, providing guidance on the parking function for the user.

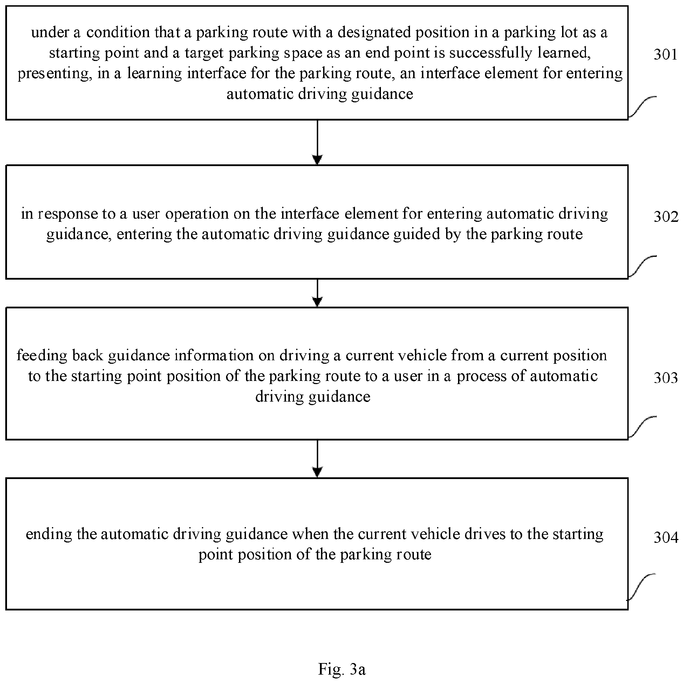

Fig. 3a is a flowchart of steps of still another guidance method for a parking function in autonomous driving according to an embodiment of the present invention, which may specifically include the following steps.

Step 301: when a parking route with a designated position in a parking lot as a starting point and a target parking space as an end point is successfully learned, presenting, in a learning interface for the parking route, an interface element for starting autonomous driving guidance.

After the current vehicle has learned the parking route, in the case of successful learning, to facilitate the user's direct use of the parking function, an interface element for starting the autonomous driving guidance may be presented in the learning interface for the parking route.

In an example, when a parking route is successfully learned, an overview map of the currently learned parking route and related information of the currently learned parking route may be further displayed. The overview view may include the parking route from a designated starting point to a target parking space, parking space information beside the parking route and other vehicle information, and may further display related information of the currently learned parking route, such as a quantity of speed bumps, total mileage and parking lot floor information.

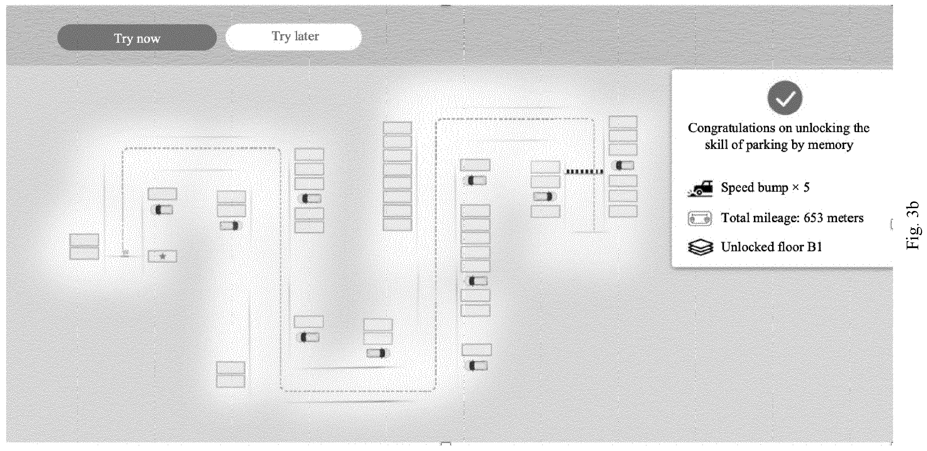

As shown in Fig. 3b, the left side of a learning interface is an overview view, and the right side thereof is related information of the currently learned parking route, for example, "Congratulations on unlocking the skill of VPA", "Speed bump × 5", "Total mileage: 653 meters" and "Unlocked floor B1". The top of the learning interface may include two interactive controls, namely, a "Try now" button (interface element for entering the guidance interface) and a "Try later" button. When the user clicks the "Try now" button, the user can enter the guidance interface for autonomous driving guidance, and when the user clicks "Try later", the user can exit the current learning interface.

By displaying the overview map and the related information of the currently learned parking route, a recognition and learning capability of VPA can be highlighted, thereby helping the user to better perceive a complete learning mode process, summarizing process information, and highlighting a memorizing capability of VPA. In addition, the user's sense of accomplishment and showing off is also increased.

Step 302: in response to a user operation on the interface element for starting autonomous driving guidance, starting the autonomous driving guidance towards the parking route.

For example, when the user clicks "Try now" in the learning interface in Fig. 2b, switching is performed from Fig. 2b to the autonomous driving guidance interface.

Step 303: returning guidance information for driving a current vehicle from a current position to the starting point of the parking route to a user during the autonomous driving guidance.

Step 304: ending the autonomous driving guidance when the current vehicle drives to the starting point of the parking route.

In this embodiment of the present invention, when a parking route with a designated position in a parking lot as a starting point and a target parking space as an end point is successfully learned, in a learning interface for the parking route, an interface element for starting autonomous driving guidance is presented; autonomous driving guidance towards the parking route is started in response to a user operation on the interface element for starting autonomous driving guidance; guidance information for driving a current vehicle from a current position to the starting point of the parking route is returned to a user during the autonomous driving guidance; and the autonomous driving guidance is ended when the current vehicle drives to the starting point of the parking route, so that when the parking route is successfully learned, autonomous driving guidance is started through the interface element of the learning interface, thereby helping the user to quickly and successfully activate autonomous driving towards the parking route.

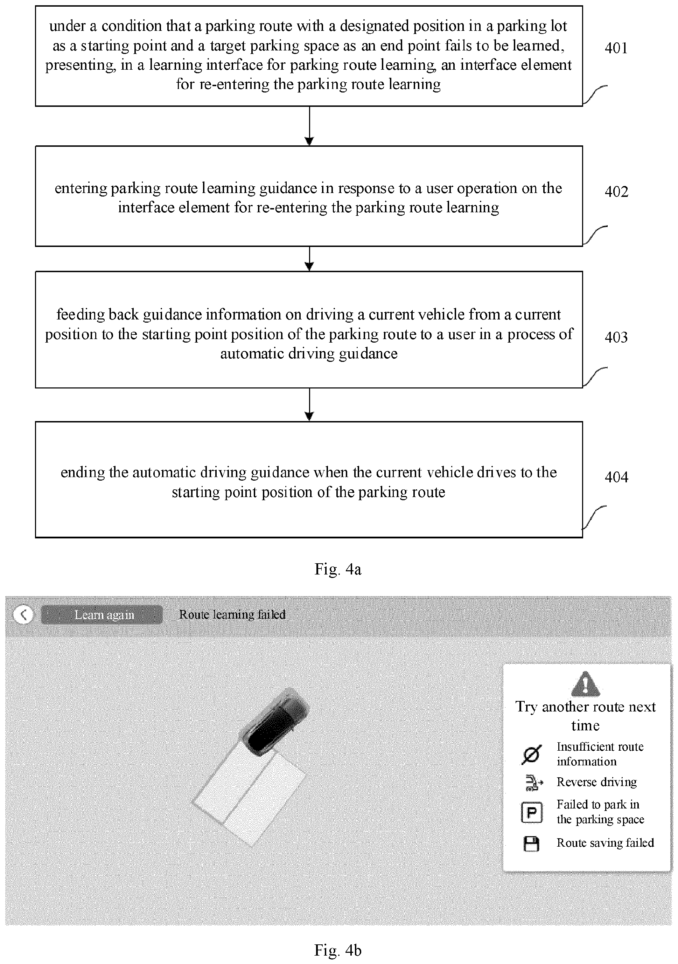

Fig. 4a is a flowchart of steps of yet another guidance method for a parking function in autonomous driving according to an embodiment of the present invention, which may specifically include the following steps.

Step 401: when parking route learning with a designated position in a parking lot as a starting point and a target parking space as an end point fails, presenting, in a learning interface for parking route learning, an interface element for re-starting the parking route learning; or
when parking route learning with a designated position in a parking lot as a starting point and a target parking space as an end point fails, when a user needs to re-learn the parking route, displaying, in a current parking route learning interface, an interface element for re-starting parking route learning.

As shown in Fig. 4b, after the parking route learning fails, a "Learn again" button is at the top of the parking route learning interface. When the user clicks this button, the user can enter a guidance interface for parking route learning, and the user is guided to return to the ground and re-enter the underground parking lot for learning.

In this case, if the user shifts to a D gear (Drive)/R gear (Reverse), or exits the page, or powers off the vehicle directly, it is equivalent to choosing to try again next time, and the parking route learning page is closed, so guidance on activation of VPA is not performed.

Scenario information "Route learning failed" is displayed on the right side of the interface element, content of environmental simulation display is displayed on the left side at the bottom, and reasons for route learning failure are listed on the right side, including "Insufficient route information", "Reverse driving", "Failed to park in the parking space", "Route saving failed", etc.

Step 402: starting parking route learning guidance in response to a user operation on the interface element for re-starting the parking route learning.

The user may perform an operation on the interface element for re-starting parking route learning, such as a click operation or a touch operation, and may start parking route learning guidance.

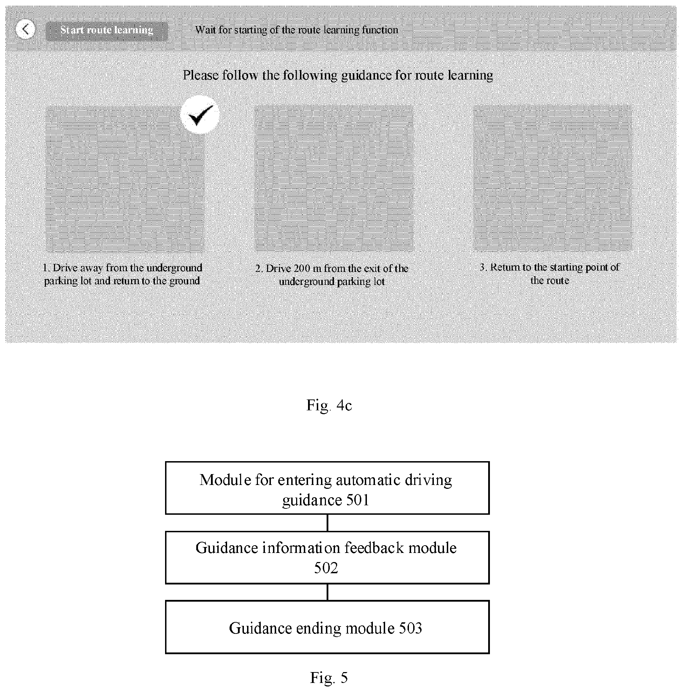

The user clicks a "Learn again" button in an interactive interface shown in Fig. 4b, and the interactive interface is switched to Fig. 4c. As shown in Fig. 4c, the top may display an interface element "Start route learning" and scenario information "The route learning function to be started", and the bottom includes "Please follow the following guidance for route learning" and guidance information corresponding to guidance steps: "1. Drive away from the underground parking lot and return to the ground", "2. Drive 200 m from the exit of the underground parking lot", and "3. Return to the starting point of the route".

Step 403: returning guidance information for driving a current vehicle from a current position to the starting point of the parking route to a user during the autonomous driving guidance.

Step 404: ending the autonomous driving guidance when the current vehicle drives to the starting point of the parking route.

In this embodiment of the present invention, when parking route learning with a designated position in a parking lot as a starting point and a target parking space as an end point fails, an interface element for re-starting parking route learning is presented in a learning interface for parking route learning; parking route learning guidance is started in response to a user operation on the interface element for re-starting the parking route learning; guidance information for driving a current vehicle from a current position to the starting point of the parking route is returned to a user during the autonomous driving guidance; and the autonomous driving guidance is ended when the current vehicle drives to the starting point of the parking route, so that when the parking route learning fails, the guidance information for re-starting the parking route learning is provided for the user, thereby helping the user to learn again quickly.

It should be noted that for simplicity of description, the method embodiments are expressed as a series of action combinations, but a person skilled in the art should be aware that the embodiments of the present invention are not limited by the described action sequence, because according to embodiments of the present invention, certain steps may be performed in other sequences or simultaneously. A person skilled in the art should also be aware that the embodiments described in the specification are preferred embodiments, and that the actions involved are not necessarily required for embodiments of the present invention.

Fig. 5 is a schematic structural diagram of a guidance apparatus for a parking function in autonomous driving according to an embodiment of the present invention, which may specifically include the following modules:
a module 501 for starting autonomous driving guidance, configured to, when a parking route with a designated position in a parking lot as a starting point and a target parking space as an end point is successfully learned, start autonomous driving guidance towards the parking route in response to a user operation;
a guidance information feedback module 502, configured to return guidance information for driving a current vehicle from a current position to the starting point of the parking route to a user during the autonomous driving guidance; and
a guidance ending module 503, configured to end the autonomous driving guidance when the current vehicle drives to the starting point of the parking route.

In an embodiment of the present invention, the guidance information feedback module 502 includes:
a submodule for presenting a guiding visual element, configured to, during the autonomous driving guidance, present a plurality of guiding visual elements in an autonomous driving guidance interface based on states of guidance steps in the autonomous driving guidance, so as to return operation guidance information of the guidance steps in the autonomous driving guidance to the user, wherein each of the guiding visual elements corresponds to one guidance step in the autonomous driving guidance.

In an embodiment of the present invention, the submodule for presenting a guiding visual element includes:
A first-intensity level presentation unit, configured to, when a target guidance step is in an ongoing state, present a guiding visual element corresponding to the target guidance step in the autonomous driving guidance interface at a first intensity level.

In an embodiment of the present invention, the submodule for presenting a guiding visual element includes:
a second-intensity level presentation unit, configured to, when a target guidance step is in a completed state, present a guiding visual element corresponding to the target guidance step in the autonomous driving guidance interface at a second intensity level, wherein the second intensity level is lower than the first intensity level.

In an embodiment of the present invention, the submodule for presenting a guiding visual element includes:
a third-intensity level presentation unit, configured to, when a target guidance step is in an uncompleted and non-ongoing state, present a guiding visual element corresponding to the target guidance step in the autonomous driving guidance interface at a third intensity level, wherein the third intensity level is lower than the second intensity level.

In an embodiment of the present invention, the guidance information feedback module 502 includes:
a first-state visual element presentation submodule, configured to, when a target guidance step is in an ongoing state, present a state visual element for the ongoing state within a preset range of a guiding visual element corresponding to the target guidance step, so as to indicate to the user that the target guidance step in the ongoing state; and
a second-state visual element presentation submodule, configured to, when a target guidance step is in a completed state, present a state visual element for the completed state within a preset range of a guiding visual element corresponding to the target guidance step, so as to indicate to the user that the target guidance step is in the completed state.

In an embodiment of the present invention, the guidance information feedback module 502 includes:
a route guidance element presentation submodule, configured to, during the autonomous driving guidance, present a route guidance element for an ongoing guidance step in content of environmental simulation display based on the ongoing guidance step, so as to return guidance information for a route to be used to the user.

In an embodiment of the present invention, the guidance information feedback module 502 may further include:
a voice pushing submodule, configured to, at the beginning and/or end of a guidance step, push an audio message for a starting and/or ending prompt to the user; and
an interruption and playing submodule, configured to, while the audio message for a starting and/or ending prompt is played, when a new message for a starting and/or ending prompt is received, interrupt playing of the prior audio message, and play the new message.

In an embodiment of the present invention, the module 501 for starting autonomous driving guidance may include:
a first interface element presentation submodule, configured to, in a learning interface for the parking route, present an interface element for starting autonomous driving guidance; and
a first response submodule, configured to, in response to a user operation on the interface element for starting autonomous driving guidance, start the autonomous driving guidance towards the parking route.

In an embodiment of the present invention, the apparatus may further include:
a module for presenting an operable state, configured to, when the autonomous driving guidance ends, present an interface element for starting parking route learning or autonomous driving in an operable state in the autonomous driving guidance interface, so as to return information that the parking route learning or the autonomous driving can be started to the user; and
a module for presenting an inoperable state, configured to, when the autonomous driving guidance is not ended, present an interface element for starting parking route learning or autonomous driving in an inoperable state in the autonomous driving guidance interface, so as to return information that the parking route learning or the autonomous driving cannot be started to the user. In an embodiment of the present invention, the apparatus may further include:
   a second interface element presentation submodule, configured to, when parking route learning with a designated position in a parking lot as a starting point and a target parking space as an end point fails, present, in a learning interface for parking route learning, an interface element for re-starting the parking route learning; and
   a second response submodule, configured to start parking route learning guidance in response to a user operation on the interface element for re-starting the parking route learning.

In an embodiment of the present invention, the apparatus may further include:
a parking route storage module, configured to, when a currently learned parking route is stored, present a view of a parking route storage process on the parking route learning interface, so as to return a storage state of the parking route to the user.

In this embodiment of the present invention, when a parking route with a designated position in a parking lot as a starting point and a target parking space as an end point is successfully learned, autonomous driving guidance towards the parking route is started in response to a user operation; guidance information for driving a current vehicle from a current position to the starting point of the parking route is returned to a user during the autonomous driving guidance; and the autonomous driving guidance is ended when the current vehicle drives to the starting point of the parking route, so that when the parking route is successfully learned, guidance on a parking function is provided for the user, thereby helping the user to quickly and successfully activate autonomous driving towards the parking route.

An embodiment of the present invention further provides a vehicle, which may include a processor, a memory and a computer program stored on the memory and capable of being run on the processor, wherein when the computer program is executed by the processor, the guidance method for a parking function in autonomous driving described above is implemented.

An embodiment of the present invention further provides a computer readable storage medium, wherein the computer readable storage medium stores a computer program, and when the computer program is executed by a processor, the guidance method for a parking function in autonomous driving described above is implemented.

Since the apparatus embodiment is substantially similar to the method embodiment, the description is relatively simple. For relevant parts, reference may be made to the description of the method embodiment.

The embodiments in this specification are described in a progressive manner, and the description of each embodiment focuses on differences from other embodiments. Mutual reference may be made to the same and similar parts of the embodiments.

A person skilled in the art should understand that an embodiment of the present invention may be provided as a method, an apparatus, or a computer program product. Therefore, an embodiment of the present invention may be in the form of a full-hardware embodiment, a full-software embodiment, or an embodiment combining software and hardware aspects. In addition, an embodiment of the present invention may be in the form of a computer program product implemented on one or more computer usable storage media (including, but not limited to, a disk storage, a CD-ROM and an optical memory) containing computer usable program code.

Embodiments of the present invention are described with reference to flowcharts and/or block diagrams of a method, a terminal device (system), and a computer program product according to embodiments of the present invention. It should be understood that each flow and/or block in the flowcharts and/or the block diagrams, and combinations of flows and/or blocks in the flowcharts and/or the block diagrams, may be implemented by computer program instructions. These computer program instructions may be provided to a processor of a general purpose computer, a special purpose computer, an embedded processor or other programmable data processing terminal devices to produce a machine, so that the instructions executed by a processor of a computer or other programmable data processing terminal device are used to produce an apparatus for implementing functions specified in one or more flows of the flowcharts and/or one or more blocks of the block diagrams.

These computer program instructions may alternatively be stored in a computer readable memory capable of guiding a computer or other programmable data processing terminal terminals to operate in a specific manner, so that the instructions stored in the computer readable memory are used to produce a product including an instruction apparatus, and the instruction apparatus implements functions specified in one or more flows of the flowcharts and/or one or more blocks of the block diagrams.

These computer program instructions may alternatively be loaded on a computer or other programmable data processing terminal devices, so that a series of operation steps are performed on the computer or other programmable terminal devices to produce computer-implemented processing, and therefore the instructions executed on the computer or other programmable terminal devices are used to provide steps for implementing functions specified in one or more flows of the flowcharts and/or one or more blocks of the block diagrams.

Although preferred embodiments among the embodiments of the present invention have been described, additional changes and modifications may be made to these embodiments by a person skilled in the art once basic inventive concepts are known. Therefore, the appended claims are intended to be construed to include the preferred embodiments as well as all changes and modifications that fall within the scope of the embodiments of the present invention.

Finally, it should be further noted that herein, relational terms such as "first" and "second" are used only to distinguish one entity or operation from another, and do not necessarily require or imply that any such actual relationship or sequence exists between these entities or operations. In addition, the term "including", "comprising" or any other variant thereof is intended to cover non-exclusive inclusion, so that a process, method, article or terminal device including a series of elements includes not only those elements, but also other elements not explicitly listed, or elements inherent to such a process, method, article or terminal device. Without further limitation, the element defined by the sentence "including a..." does not exclude that other identical elements are also present in the process, method, article or terminal device including the elements.

Detailed descriptions of the guidance method and apparatus for a parking function in autonomous driving are provided above, and specific examples are applied herein to illustrate the principle and implementations of the present invention. The descriptions of the foregoing embodiments are provided only to help understand the method and core idea of the present invention. In addition, for a person of ordinary skill in the art, changes may be made to the specific implementations and application scope according to the idea of the present invention. In conclusion, the content of this specification should not be construed as a limitation to the present invention.

## Claims

1. A guidance method for a parking function in autonomous driving, comprising:
when a parking route with a designated position in a parking lot as a starting point and a target parking space as an end point is successfully learned, starting autonomous driving guidance towards the parking route in response to a user operation;
returning guidance information for driving a current vehicle from a current position to the starting point of the parking route to a user during the autonomous driving guidance; and
ending the autonomous driving guidance when the current vehicle drives to the starting point of the parking route.

2. The method of claim 1, wherein said returning guidance information for driving a current vehicle from a current position to the starting point of the parking route to a user during the autonomous driving guidance comprises:
during the autonomous driving guidance, displaying a plurality of guiding visual elements in an autonomous driving guidance interface based on states of guidance steps in the autonomous driving guidance, so as to return operation guidance information of the guidance steps in the autonomous driving guidance to the user, wherein each of the guiding visual elements corresponds to one guidance step in the autonomous driving guidance.

3. The method of claim 2, wherein said displaying a plurality of guiding visual elements in an autonomous driving guidance interface based on states of guidance steps in the autonomous driving guidance comprises:
when a target guidance step is in an ongoing state, displaying a guiding visual element corresponding to the target guidance step in the autonomous driving guidance interface at a first intensity level.

4. The method of claim 3, wherein said displaying a plurality of guiding visual elements in an autonomous driving guidance interface based on states of guidance steps in the autonomous driving guidance further comprises:
when a target guidance step is in a completed state, displaying a guiding visual element corresponding to the target guidance step in the autonomous driving guidance interface at a second intensity level, wherein the second intensity level is lower than the first intensity level.

5. The method of claim 4, wherein said displaying a plurality of guiding visual elements in an autonomous driving guidance interface based on states of guidance steps in the autonomous driving guidance further comprises:
when a target guidance step is in an uncompleted and non-ongoing state, displaying a guiding visual element corresponding to the target guidance step in the autonomous driving guidance interface at a third intensity level, wherein the third intensity level is lower than the second intensity level.

6. The method of any of claims 2-5, further comprising:
when a target guidance step is in an ongoing state, displaying a state visual element for the ongoing state within a preset range of a guiding visual element corresponding to the target guidance step, so as to indicate to the user that the target guidance step is in the ongoing state; and
when a target guidance step is in a completed state, displaying a state visual element for the completed state within a preset range of a guiding visual element corresponding to the target guidance step, so as to indicate to the user that the target guidance step is in the completed state.

7. The method of any of claims 1-5, wherein said returning guidance information for driving a current vehicle from a current position to the starting point of the parking route to a user during the autonomous driving guidance further comprises:
during autonomous driving guidance, displaying a route guidance element for an ongoing guidance step in content of environmental simulation display based on the ongoing guidance step, so as to return guidance information for a route to be used to the user.

8. The method of any of claims 1-5, wherein said returning guidance information for driving a current vehicle from a current position to the starting point of the parking route to a user during the autonomous driving guidance further comprises:
at the beginning and/or end of a guidance step, pushing an audio message for a starting and/or ending prompt to the user; and
while the audio message is played, if a new message for a starting and/or ending prompt is received, interrupting playing of the audio message, and playing the new message.

9. The method of claim 1, wherein said starting autonomous driving guidance towards the parking route in response to a user operation comprises:
in a learning interface for the parking route, presenting an interface element for starting autonomous driving guidance; and
in response to a user operation on the interface element for starting autonomous driving guidance, starting the autonomous driving guidance towards the parking route.

10. The method of claim 1, further comprising:
when the autonomous driving guidance ends, presenting interface elements for starting parking route learning or autonomous driving in an operable state in the autonomous driving guidance interface, so as to return information to the user that parking route learning or autonomous driving can be started; or
when the autonomous driving guidance has not ended, presenting interface elements for starting parking route learning or autonomous driving in an inoperable state in the autonomous driving guidance interface, so as to return information to the user that parking route learning or autonomous driving cannot be started.

11. The method of claim 1, further comprising:
when parking route learning with a designated position in a parking lot as a starting point and a target parking space as an end point fails, presenting, in a parking route learning interface, an interface element for re-starting parking route learning; and
starting parking route learning guidance in response to a user operation on the interface element for re-starting parking route learning.

12. The method of claim 1, further comprising:
when a currently learned parking route is stored, presenting a view of a parking route storage process on the parking route learning interface, so as to return a storage state of the parking route to the user.

13. A guidance apparatus for a parking function in autonomous driving, comprising:
an autonomous driving guidance start module, configured to, when a parking route with a designated position in a parking lot as a starting point and a target parking space as an end point is successfully learned, start autonomous driving guidance towards the parking route in response to a user operation;
a guidance information feedback module, configured to return guidance information for driving a current vehicle from a current position to the starting point of the parking route to a user during the autonomous driving guidance; and
an autonomous driving guidance end module, configured to end the autonomous driving guidance when the current vehicle drives to the starting point of the parking route.

14. A vehicle, comprising a processor, memory and program codes stored on the memory, wherein the program codes are executable by the processor to perform a guidance method for a parking function in autonomous driving in accordance with any one of claims 1-12.

15. A computer readable storage medium, comprising program codes which, when executed by a processor, result in performance of a guidance method for a parking function in autonomous driving in accordance with any one of claims 1-12.
